# NEUE EUROPÄISCHE PATENTSCHRIFT

(11) **EP 2 466 989 B2**
(45) Veröffentlichungstag und Bekanntmachung des Hinweises auf die Entscheidung über den Einspruch: **17.02.2016**
(45) Hinweis auf die Patenterteilung: 22.05.2013
(21) Anmeldenummer: 12001671.2
(22) Anmeldetag: 08.10.2010
(51) Int. Cl.: H05B 3/24

(54) **Verfahren zum Herstellen einer elektrischen Heizvorrichtung**
Method for manufacturing an electrical heating device
Procédé de fabrication d'un dispositif de chauffage électrique

(43) Veröffentlichungstag der Anmeldung: 20.06.2012
(62) Teilanmeldung aus: 10013474.1
(73) Patentinhaber: Eberspächer catem GmbH & Co. KG, 76863 Herxheim (DE)
(72) Erfinder: Bohlender, Franz, 76870 Kandel (DE); Niederer, Michael, 76889 Kapellen Drusweiler (DE)
(74) Vertreter: Grünecker Patent- und Rechtsanwälte PartG mbB

(56) Entgegenhaltungen:
- EP-A1- 1 157 867
- EP-A1- 1 395 098
- EP-A1- 1 630 013
- EP-A1- 1 872 986
- DE-A1- 10 034 572
- DE-A1- 19 600 619
- US-A1- 5 812 375

## Beschreibung

Die vorliegende Erfindung betrifft eine elektrische Heizvorrichtung, insbesondere für ein Kraftfahrzeug, mit einem Gehäuse, welches eine von einem Medium durchströmbare Zirkulationskammer umschließt, in welche Heizrippen hineinragen, die mit wenigstens einem PTC-Heizelement in Wärme leitendem Kontakt stehen, und mit einer in baulicher Einheit vorgesehenen Steuereinrichtung mit wenigstens einer bestückten Leiterplatte, die in einem Steuergehäuse aufgenommen ist.

Eine solche elektrische Heizvorrichtung ist aus der auf die Anmelderin zurückgehenden EP 1 872 986 A1 bekannt. Bei dieser vorbekannten elektrischen Heizvorrichtung handelt es sich um eine solche mit einem Gehäuse, welches eine von einem Medium durchströmbare Zirkulationskammer umschließt. Die Heizrippen ragen hierbei umhüllt von Heizrippen mit jeweils einer U-förmigen Ausnehmung in die Zirkulationskammer hinein. Die U-förmigen Ausnehmungen sind innerhalb des Gehäuses vorgesehen und trennen die mit dem zu erwärmenden Fluid durchströmbare Zirkulationskammer von einer Anschlusskammer, in weicher der Leistungsstrom zur Bestromung der PTC-Heizelemente geführt wird.

Allerdings ist die vorliegende Erfindung nicht auf solche üblicherweise für flüssige Medien ausgelegte elektrische Heizvorrichtungen beschränkt. Als gattungsgemäß kann auch eine elektrische Heizvorrichtung zur Erwärmung von Luft, insbesondere zur Innenraumbeheizung eines Kraftfahrzeuges angesehen werden. Bei dieser sind die Heizrippen üblicherweise durch mäandrierend gebogene Blechbahnen gebildet, die in dem zu erwärmenden Luftstrom freiliegen und unmittelbar an den PTC-Heizelementen anliegen. Diese PTC-Heizelemente umfassen wenigstens einen PTC-Stein und an gegenüberliegenden Seiten dieser anliegende Blechbänder, durch welche die PTC-Steine mit unterschiedlicher Polarität bestromt werden können. Das Gehäuse wird üblicherweise durch einen Rahmen, regelmäßig aus Kunststoff gebildet. Dieser Rahmen hat eine sehr geringe Erstreckung in Strömungsrichtung der zu erwärmenden Luft. Eine solche gattungsgemäße elektrische Heizvorrichtung zur Erwärmung von Luft mit einer Steuervorrichtung in baulicher Einheit ist beispielsweise aus der EP 0 901 311 bzw. der B 99/01307 sowie weiterhin der DE 199 25 757 bekannt.

Aus der EP 1 395 098 A1 ist eine elektrische Heizvorrichtung mit einer in baulicher Einheit vorgesehenen Steuereinrichtung bekannt. Die Steuereinrichtung hat eine Leiterplatte, die mit Verlustleistung erzeugenden Halbleiter-Leistungsschaltem bestückt ist. Die Leistungsschalter sind auf einer Seite der Leiterplatte vorgesehen. Ein dem Leistungsschalter jeweils zugeordnetes Kühlelement ist auf der anderen Seite der Leiterplatte vorgesehen. Die Leiterplatte hat zwischen dem Leistungsschalter und dem Kühlelement eine Bohrung, in welche ein wärmeleitender Stopfen eingesetzt ist, der einerseits an dem Leistungsschalter und andererseits an dem Kühlelement anliegt. Das Kühlelement und der Leistungsschalter sind von einem C-förmigen Klammerelement umgriffen, so dass beide Bauteile unter Zwischenlage des wärmeleitenden Stopfens aneinander anliegen. Die so vormontierte Leiterplatte wird in ein Steuergehäuse der elektrischen Heizvorrichtung eingebaut.

Bei derartigen elektrischen Heizvorrichtungen werden hohe Ströme geschaltet. Bei der üblichen Bordnetzspannung von 12 Volt werden Ströme von über 250 Ampere und bei Hochvolt-Anwendungen von 180 bis 500 Volt werden Ströme von über 70 Ampere geschaltet, um die notwendigen Heizleistungen zu erreichen. Dies bedingt zum Einen eine besondere Kontaktierung sämtlicher Elemente der elektrischen Heizvorrichtungen. Ein guter Übergangswiderstand muss an sämtlichen Strom führenden Verbindungen in jedem Fall sichergestellt werden. Darüber hinaus besteht bei solchen elektrischen Heizvorrichtungen das Problem, dass das Schalten hoher Ströme zu elektromagnetischen Störungen führt, die zwar bei elektrischen Heizvorrichtungen mit einer Steuereinrichtung in baulicher Einheit reduziert, allerdings nicht vollkommen eliminiert sind. So stellen die EMV-Probleme weiterhin ein Hindernis für eine zufriedenstellende elektrische Heizvorrichtung dar, die hohe Wärmeleistungen erzeugt.

Der vorliegenden Erfindung liegt das Problem zugrunde, eine elektrische Heizvorrichtung der eingangs genannten Art anzugeben, die den EMV-Problemen in verbesserter Weise Rechnung trägt und sich wirtschaftlich herstellen lässt. Des Weiteren will die vorliegende Erfindung eine elektrische Heizvorrichtung der eingangs genannten Art mit einer Steuereinrichtung mit bestückter Leiterplatte angeben, die wenigstens ein Verlustleistung erzeugendes Steuerelement trägt, mit welchem Verfahren die elektrische Steuervorrichtung besonders einfach herstellbar ist.

Zur Lösung des vorrichtungsmäßigen Problems wird mit der vorliegenden Erfindung eine elektrische Heizvorrichtung mit den Merkmalen von Anspruch 1 vorgeschlagen. Diese unterscheidet sich dadurch von dem gattungsbildenden Stand der Technik, dass das Steuergehäuse einen Steuergehäuserahmen sowie einen Gehäusedeckel umfasst, der an einer Stirnseite des Steuergehäuserahmens anliegt. Der Steuergehäuserahmen umgibt die bestückte Leiterplatte umfänglich und ist aus einem metallischen Werkstoff gebildet. In gleicher Weise ist vorzugsweise auch der Steuergehäusedeckel aus einem metallischen Werkstoff ausgeformt. Hierdurch wird jedenfalls ein nach außen die bestückte Leiterplatte umgebendes und damit die Bauelemente auf der beschichteten Leiterplatte abschirmendes Steuergehäuse angegeben. Der Steuergehäuserahmen ist dabei vorzugsweise als zylindrisches Bauteil ausgebildet, d.h. weist - abgesehen von stirnseitigen Begrenzungsflächen, insbesondere an den Endseiten des Steuergehäuserahmens - lediglich Wandungen auf, deren Oberflächen sich parallel zueinander erstrecken. Dabei ist der Steueraus Aluminium gebildet. Der Gehäusedeckel kann indes aus einem anderen Werkstoff ausgeformt sein, beispielsweise aus gestanztem Stahlblech.

Mit Rücksicht auf eine Herstellung des Steuergehäuserahmens im Wege des Strangpressens erstrecken sich vorzugsweise sämtliche einteilig an dem Steuergehäuserahmen vorgesehenen Funktionsflächen und -elementen zwischen den beiden Stirnseiten des Steuergehäuserahmens, vorzugsweise mit derjenigen betragsmäßigen Längserstreckung, die die Wandungen des Steuergehäuserahmens haben. Gemäß der vorliegenden Erfindung ist indes die Tragwerksstruktur als separates Bauelement hergestellt und mit dem Steuergehäuserahmen verbunden. Dieser kann hierzu beispielsweise Längsnuten aufweisen, die an Innenwandungsabschnitten des Steuergehäuses ausgespart sind und in welche hammerkopfartige Enden der Tragwerksstruktur eingebracht sind, um diese an vorbestimmter Stelle zu halten. Die Tragwerksstruktur befindet sich dabei vorzugsweise mit ihrer Oberseite bündig zu derjenigen freien Stirnseite des Steuergehäuserahmens, an welcher auch der Steuergehäusedeckel anliegt. Mithin bildet der auf den Steuergehäuserahmen aufgeschraubte Steuergehäusedeckel einen Anschlag für das separate, die Tragwerksstruktur ausbildende Element.

Das die Tragwerksstruktur ausbildende Element kann beispielsweise aus Kunststoff ausgebildet sein. Es trägt ein kompressibles Kompressionselement, welches eine gegen die bestückte Leiterplatte wirkende Druckkraft erzeugt. Die Tragwerksstruktur ist danach zwischen der bestückten Leiterplatte und dem Steuergehäusedeckel unter Kompression fixiert. Der Aspekt einer Verspannung der bestückten Leiterplatte durch ein elastische Dehnungsanteile speicherndes Element, wie beispielsweise ein Kompressionselement, kann für sich erfindungsgemäß sein. Bei einer solchen Ausgestaltung ist neben den oberbegrifflichen Merkmalen von Anspruch 1 zusätzlich wenigstens ein Mittel vorgesehen, mit welchem die Leiterplatte gegen dasjenige Gehäuse gedrückt wird, welches eine von dem zu erwärmenden Medium durchströmbare Zirkulationskammer umschließt, oder aber gegen einen Kühlkörper, der in diesem Gehäuse so angeordnet wird, dass er Wärme leitend mit dem zu erwärmenden Medium in Verbindung steht. Das Kompressionselement kann separat oder einteilig mit der Tragwerksstruktur ausgeformt sein. Auch kann die Tragwerksstruktur insgesamt das Kompressionselement ausbildet. Denkbar ist ferner die Herstellung des Kompressionselementes im Wege des Zweikomponentenspritzgießens, wobei ein kompressibler weicherer Kunststoff nahe der bestückten Leiterplatte ausgeformt wird, wohingegen sich ein härterer und steifer Kunststoff nahe des Steuergehäusedeckels befindet.

Das Kompressionselement ist vorzugweise aus einem Kunststoff mit einer Härte Shore-A von zwischen 60 und 80 ausgebildet. Als geeigneter Werkstoff kommt insbesondere Silikon (Si) oder ein Gummi (EPDM) in Frage.

Das Kompressionselement dient der Fixierung der Leiterplatte gegen eine an der Unterseite an dem Gehäuse der Heizvorrichtung und/oder einem Gehäuseboden gebildeten Gegenfläche. Durch diese Kompressionskraft ist danach die bestückte Leiterplatte in Höhenrichtung des Steuergehäuserahmens fixiert. In einer sich quer zu der Kraftwirkungsrichtung der Druckkraft erstreckenden Ebene ist die bestückte Leiterplatte üblicherweise mit geringem Spiel zwischen den Innenflächen des Steuergehäuserahmens aufgenommen und danach positioniert.

Die Übertragung der Druckkraft von dem Kompressionselement auf die bestückte Leiterplatte erfolgt vorzugsweise durch Stützpfeiler, die sich rechtwinklig zu der Oberfläche der bestückten Leiterplatte erstrecken. Diese Stützpfeiler können lediglich auf der der Tragwerksstruktur gegenüberliegenden Oberfläche der bestückten Leiterplatte anliegen, die Leiterplatte durchragen, oder aber die Leiterplatte überragen und beispielsweise durch Anschmelzen der freien Enden der Stützpfeiler verdickt ausgebildet sein, um die Leiterplatte unverlierbar mit der Tragwerksstruktur zu verbinden. Üblicherweise werden mehrere Stützpfeiler vorgesehen, die jeweils voneinander abweichend nach obiger Maßgabe ausgebildet sein können. Es reicht indes im Allgemeinen aus, die Stützpfeiler lediglich gegen die der Tragwerksstruktur zugewandte Oberfläche der bestückten Leiterplatte anzulegen, um die bestückte Leiterplatte mit Druck gegen die oben erwähnte Gegenfläche zu drücken und danach zu fixieren.

Die von dem Kompressionselement bewirkte Druckkraft wird vorzugsweise genutzt, um Abwärme eines oder sämtlicher Verlustleistung erzeugender Steuerelemente, die von der Leiterplatte getragen sind, an ein Kühlelement abzugeben. Hierzu befindet sich das Verlustleistung erzeugende Steuerelement auf der dem Kompressionselement abgewandten Seite der Leiterplatte, und zwar vorzugsweise zwischen dem freien Ende des Stützpfeilers und dem Kühlelement. Der Stützpfeiler kann dabei unmittelbar gegen das Verlustleisten erzeugende Steuerelement oder aber unter Zwischenlage eines weiteren Elementes, insbesondere der bestückten Leiterplatte dagegen anliegen.

Insbesondere bei der Ausbildung des Gehäuses aus Kunststoff ist es zu bevorzugen, das Kühlelement als hiervon separates Element aus einem gut Wärme leitenden Werkstoff, wie beispielsweise Aluminium oder Kupfer auszubilden und in Wärme leitendem Kontakt mit dem zu erwärmenden Medium vorzusehen. Das Kühlelement kann dabei unmittelbar in der Zirkulationskammer frei liegen oder aber in einem hiervon abgetrennten und von dem zu erwärmenden Medium geströmten Bereich der elektrischen Heizvorrichtung. Das Kühlelement kann aber ebenso gut durch einen Bereich des Gehäuses ausgebildet sein, insbesondere dann, wenn das Gehäuse selbst aus einem gut Wärme leitenden Material gebildet ist.

Mit Blick auf eine möglichst gute Wärmeleitung wird gemäß einer bevorzugten Weiterbildung der vorliegenden Erfindung vorgeschlagen, einen Steuergehäuseboden vorzusehen, der an einer anderen Stirnseite des Steuergehäuserahmens anliegt als der Steuergehäusedeckel und der wenigstens eine in Verlängerung des Stützpfeilers Öffnung aufweist. Hierdurch wird die Möglichkeit geschaffen, das Verlustleistung erzeugende Steuerelement wärmeleitend mit einem Kühlelement zu verbinden, welches sich außerhalb des Steuergehäuses befindet, insbesondere innerhalb des Gehäuses der Heizvorrichtung und welches danach auch als Heizergehäuse bezeichnet werden kann.

Durch eine zwischen dem Verlustleistung erzeugenden Element und dem Kühlelement, insbesondere dem Heizergehäuse befindlichen elektrischen Isolierlage wird die Möglichkeit geschaffen, die Steuervorrichtung elektrisch von dem Heizergehäuse zu trennen, welches die Zirkulationskammer umgibt.

Wiederum mit Rücksicht auf eine leichte Herstellung und sichere Befestigung des Steuergehäuses an dem Heizergehäuse, hat der Steuergehäuserahmen in den Eckbereichen Befestigungsvorsprünge. Diese Vorsprünge sind vorzugweise nach Art von Augen ausgebildet, durch die eine Gewindestange hindurchführbar ist, so dass die Gewindestange formschlüssig innerhalb des Auges gehalten ist. Eine solche Gewindestange, die beispielsweise durch den Schaft einer Schraube gebildet sein kann, wird in den entsprechenden Befestigungsvorsprüngen an dem Steuergehäuserahmen gehalten und vorzugsweise mit dem die Zirkulationskammer ausbildenden Gehäuse verschraubt. Dabei sind das bzw. die Kühlelemente und die an das Heizergehäuse anlegbare Stirnseite des Steuergehäuserahmens sowie das bzw. die Verlustleistung erzeugenden Steuerelemente derart aufeinander abgestimmt, dass sich bei diesem Anschrauben des Steuergehäuserahmens an das Heizergehäuse zunächst eine Anlage zwischen dem Kühlelement und dem Verlustleistung erzeugenden Steuerelement ergibt. Mit zunehmendem Verschrauben erfolgt eine vorgespannte Anlage des Verlustleistung erzeugenden Steuerelementes an die Oberfläche des Kühlelementes, bis schließlich nach Beendigung der Montage die Stirnseite des Steuergehäuses an dem Gehäuse anliegt und das Verlustleistung erzeugende Steuerelement unter Vorspannung unmittelbar oder mittelbar, jedenfalls aber Wärme leitend gegen die Oberfläche des Kühlelementes angedrückt montiert ist.

Hierin besteht auch das Wesen der verfahrensmäßigen Lösung der vorliegenden Erfindung. Bei dem erfindungsgemäßen Verfahren zum Herstellen der Heizvorrichtung, welche ein die Zirkulationskammer ausbildendes Gehäuse sowie ein unabhängig davon vorgesehenes Steuergehäuse umfasst, wird das Steuergehäuse an dem die Zirkulationskammer ausbildenden Gehäuse montiert. Dabei wird das Verlustleistung erzeugende Steuerelement unter Vorspannung gegen ein an dem Gehäuse ausgebildetes Kühlelement angelegt. Die zur guten Wärmeleitung zwischen dem Verlustleistung erzeugenden Element und dem separat hierzu vorgesehenen Kühlelement notwendige Kontaktierung wird dementsprechend bei der Montage des Steuergehäuses an dem Gehäuse bewirkt. Dies führt zu einer erheblichen Vereinfachung bei der Herstellung der elektrischen Heizvorrichtung. So ist beispielsweise aus der EP 0 901 311 A2 eine elektrische Heizvorrichtung in baulicher Einheit mit der Steuervorrichtung bekannt, bei welcher jedes Verlustleistung erzeugende Steuerelement mit einer Federklammer an einem Kühlelement befestigt wird, welches als Teil des Steuermoduls vorgesehen ist. Auch sind Lösungen bekannt, bei denen Kühlelemente benachbart zu dem Verlustleistung erzeugenden Steuerelement mit der Leiterplatte verbunden, beispielsweise auf diese aufgelötet werden. Auch hierbei ist es notwendig, das Kühlelement zuvor relativ zu dem Verlustleistung erzeugenden Steuerelement zu positionieren und damit unmittelbar oder mittelbar zu verbinden. Die so vorbereitete Steuereinrichtung wird danach mit dem die Zirkulationskammer umschließenden Gehäuse verbunden. Im Gegensatz dazu erlaubt das erfindungsgemäße Verfahren eine Befestigung des Verlustleistung erzeugenden Elementes für sich an der Leiterplatte, wobei die wärmemäßige Kontaktierung mit dem Kühlelement bei der ohnehin notwendigen Montage des Steuergehäuses an dem Gehäuse verwirklicht wird.

Es ergibt sich zwangsläufig, dass im Rahmen dieser Montage die elektrische Kontaktierung zwischen den Heizelementen und den Leiterbahnen der bestückten Leiterplatte zu erfolgen hat. Um diese elektrische Kontaktierung zu vereinfachen, wird gemäß einer bevorzugten Weiterbildung der erfindungsgemäßen Heizvorrichtung vorgeschlagen, an gegenüberliegenden Randbereichen der bestückten Leiterplatte Kontaktaufnahmen für elektrische Steckelemente auszusparen. Diese Kontaktaufnahmen sind als Langlöcher ausgebildet und ihnen sind elektrisch leitende und mit Leiterbahnen der bestückten Leiterplatte elektrisch verbundene Steckgegenelemente zugeordnet. Als Steckgegenelemente sind üblicherweise Steckerstifte vorgesehen, die in die Kontaktaufnahmen eingebracht werden. Die Kontaktaufnahmen haben Langlöcher derart, dass die Längsachsen der jeweiligen Langlöcher sich jeweils parallel zueinander erstrecken. Hierdurch ist die Möglichkeit geschaffen, gewisse Toleranzfehler beim Herstellen des Steckkontaktes auszugleichen.

Weitere Einzelheiten und Vorteile der vorliegenden Erfindung ergeben such aus der nachfolgenden Beschreibung von Ausführungsbeispielen in Verbindung mit der Zeichnung. In dieser zeigen:
- Figur 1: eine Explosionszeichnung eines ersten Ausführungsbeispiels;
- Figur 2: ein Mittellängsschnitt durch das in Figur 1 gezeigte Ausführungsbeispiel;
- Figur 3: eine Querschnittsansicht entlang der Linie III-III gemäß der Darstellung in Figur 2;
- Figur 4: perspektivische Ansichten der beiden Gehäuse mit den dazwischen vorgesehenen Abdeckelementen des zuvor diskutierten Ausführungsbeispiels;
- Figur 5: eine Explosionszeichnung eines zweiten Ausführungsbeispiels;
- Figur 6: einen teilweise geschnittene perspektivische Seitenansicht des zweiten Ausführungsbeispiels;
- Figur 7: eine Längsschnittsansicht des zweiten Ausführungsbeispiels;
- Figur 8: eine vergrößerte Längsschnittsansicht des Steuergehäuses des zweiten Ausführungsbeispiels;
- Figur 9: einen teilweise geschnittene perspektivische Seitenansicht des Steuergehäuses des zweiten Ausführungsbeispiels;
- Figur 10: eine Längsschnittsansicht des Steuergehäuses des zweiten Ausführungsbeispiels;
- Figur 11: eine Draufsicht auf das Steuergehäuse des zweiten Ausführungsbeispiels;
- Figur 12: eine Explosionszeichnung eines dritten Ausführungsbeispiels;
- Figur 13: eine Längsschnittsansicht des dritten Ausführungsbeispiels;
- Figur 14: eine perspektivische Seitenansicht eines vierten Ausführungsbeispiels und
- Figur 15: eine Längsschnittansicht des in Figur 14 gezeigten vierten Ausführungsbeispiels.

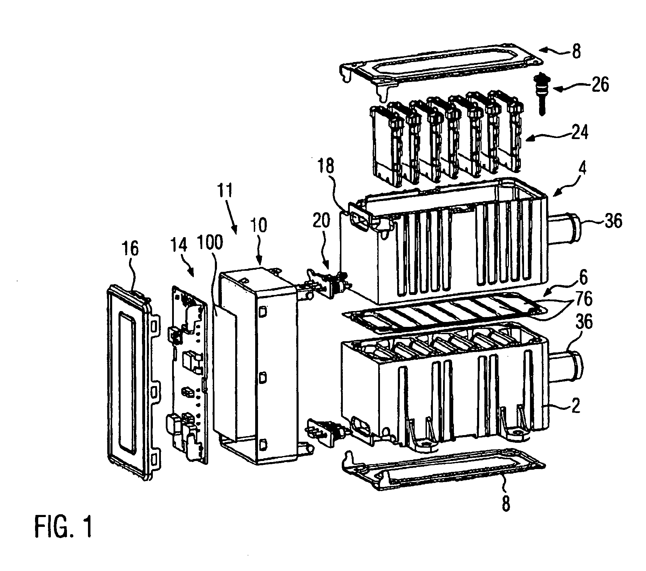

Die Figur 1 zeigt eine perspektivische Explosionszeichnung eines ersten Ausführungsbeispiels einer elektrischen Heizvorrichtung. Diese umfasst ein erstes Gehäuse 2 und ein hierzu im Wesentlichen spiegelbildlich ausgebildetes zweites Gehäuse 4, die unter Zwischenlage eines Abdeckelementes 6 miteinander verbunden und außenseitig jeweils über ein Gehäusedeckel 8 abgedeckt sind.

An einer gemeinsamen Stirnseite der beiden Gehäuse 2, 4 befindet sich ein mit Bezugszeichen 10 gekennzeichnetes Steuergehäuse einer Steuereinrichtung 11, welches einen Steuergehäuserahmen 12 hat, der eine bestückte Leiterplatte 14 in sich aufnimmt und mit einem Steuergehäusedeckel 16 verschlossen ist.

Die beiden Gehäuse 2, 4 weisen an ihrer dem Steuergehäuse 10 zugewandten Stirnseite jeweils eine Gehäuseanschlussöffnung 18 auf, die nahe des Gehäusedeckels 8 vorgesehen ist. In diese Steuergehäuseanschlussöffnung 18 ist jeweils ein Steckergehäuse 20 einbringbar, welches aus einem isolierenden Material, beispielsweise Kunststoff hergestellt ist und mehrere Steckelemente 22 trägt, die einen elektrischen Kontakt zwischen in den beiden Gehäusen 2, 4 vorgesehenen elektrischen Leiterbahnen und den Leiterbahnen der bestückten Leiterplatte 14 vermitteln.

In Figur 1 sind des Weiteren Heizplattenelemente 24 dargestellt, die leicht keilförmig ausgebildet sind und denjenigen PTC-Heizelementen entsprechen, die in der europäischen Patentanmeldung EP 1 921 896 A1 offenbart sind. Die Offenbarung dieser europäischen Patentveröffentlichung wird durch Bezugnahme in den Offenbarungsgehalt dieser Patentanmeldung aufgenommen.

Der Reihe der Heizplattenelemente/ PTC-Heizelemente 24 vorgelagert ist ein Temperaturfühler 26 gezeigt.

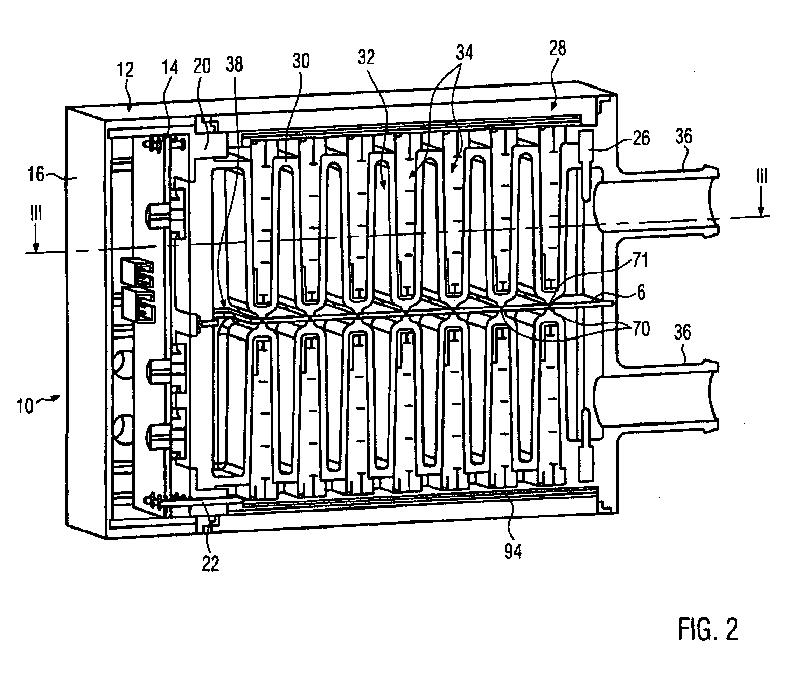

Der Einbau dieser Elemente in die Gehäuse 2, 4 ist insbesondere der Figur 2 zu entnehmen. Danach bilden die Gehäuse 2, 4 jeweils zwei unterschiedliche Kammern aus, nämlich zum Einen eine Anschlusskammer 28 und eine hiervon durch eine Trennwand 30 getrennte Zirkulationskammer. Von der Trennwand 30 gehen in die Zirkulationskammer 32 U-förmige Ausnehmungen 34 ab, die tief in die Zirkulationskammer 32 hineinragen und höhengleich mit der Trennwand 30 zu der Anschlusskammer 28 hin enden. Diese Ausnehmungen 34 sind derart bemessen, dass die Heizplattenelemente 24 mit einem von diesem umfassten Keil gegen die gegenüberliegenden Wandungen der U-förmigen Ausnehmungen 34 Wärme leitend eingesetzt werden können, wie dies die zuvor bereits erwähnte EP 1 821 896 A1 ausführlich beschreibt.

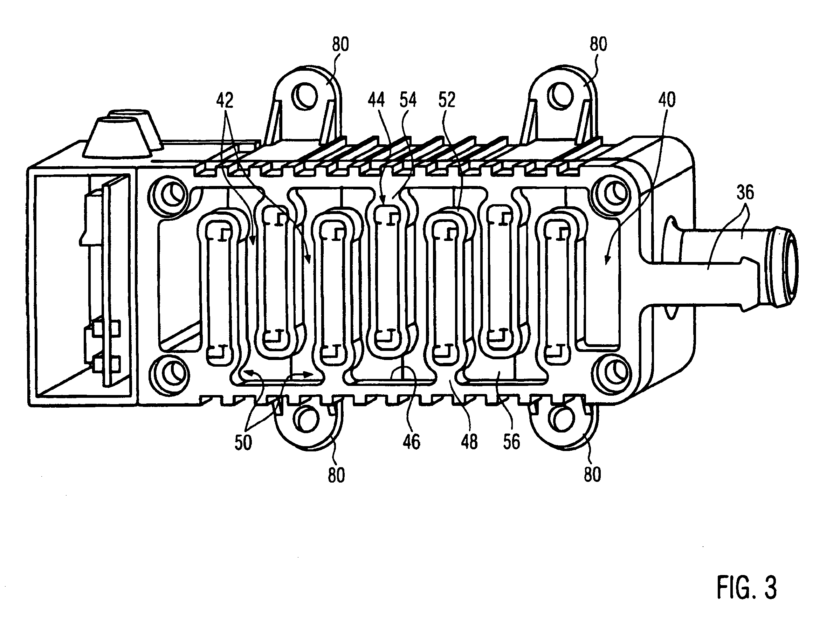

Die Zirkulationskammer 32 jedes einzelnen Gehäuses 2, 4 erstreckt sich zwischen einem Anschlussstutzen 36 zum Anschluss eines Fluidschlauches und einer Strömungsdurchgangsöffnung 38. Zwischen diesen beiden Ausgangs- bzw. Endpunkten der Zirkulationskammer 32 wird innerhalb dieser ein mäandrierender Strömungskanal 40 innerhalb des Gehäuses 2 bzw. 4 ausgebildet, dessen Verlauf insbesondere der Figur 3 zu entnehmen ist. Der Strömungskanal 40 hat Strömungskanalabschnitte 42, die sich rechtwinklig zu der Längserstreckung des Gehäuses 2 bzw. 4 erstrecken und jeweils begrenzt sind durch Außenwände von die U-förmigen Ausnehmungen 34 bildenden Heizrippen 44. Diese Heizrippen 44 sind alternierend an gegenüberliegenden Innenseiten 46 der Gehäuse 2, 4 angeordnet. Das Gehäuse 2 sowie die Heizrippen 44 sind dabei einheitlich an einem Aluminiumdruckgussteil verwirklicht. Befestigt sind die Heizrippen 44 an den gegenüberliegenden Innenseiten 46 des Gehäuses 2 bzw. 4 über einen Steg 48. Dieser Steg 48 hat eine geringere Dicke als die Heizrippen 44. Als Dicke in diesem Sinne ist die Erstreckung des Steges in einer Richtung rechtwinklig zu den Strömungskanalabschnitten 42, d.h. in Längsrichtung des Gehäuses 2 zu verstehen. Die zu dem Strömungskanal 40 frei liegenden Oberflächen der Stege 48 sind konkav ausgeformt, wodurch sich eine Ausbuchtung 50 als Teil des Strömungskanals 40 ergibt. In dem Strömungskanal 40 strömendes und zu erwärmendes Fluid kann dementsprechend einerseits die freien Enden 52 der Heizrippen 44 umströmen, andererseits aber auch jedenfalls einen erheblichen Teil des fußseitigen Endes 54, so dass die Heizrippen 44 sowohl über ihre gegenüberliegenden Längsseiten Wärme an das zu erwärmende Fluid abgeben können, als auch über ihre beiden Stirnseiten 52, 54. Dabei wird zwischen freien Enden 52 und der Innenseite 46 des Gehäuses ein Strömungsdurchgang 56 ausgebildet, der die jeweiligen Strömungskanalabschnitte 42 miteinander verbindet.

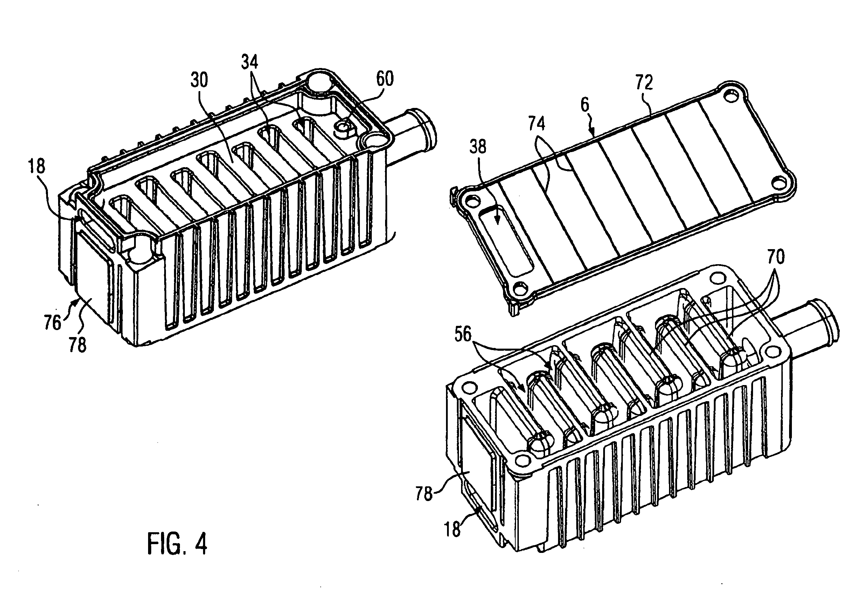

Die beiden in den Figuren 1 bis 3 gezeigten Gehäuse 2 sind identisch ausgebildet, so dass sich ein Strömungsweg durch zwei mäandrierend ausgebildete Strömungskanäle 40 zwischen den beiden Anschlussstutzen 36 ergibt. Die zuvor bereits beschriebenen Temperaturfühler 26 sind ebenfalls zweifach vorgesehen, und zwar unmittelbar im Bereich der Mündung der Anschlussstutzen 36. Hierzu sind in den jeweiligen Gehäusen 2, 4 Temperaturfühlerbohrungen 60 zur Aufnahme jeweils eines Temperaturfühlers 26 ausgespart (vgl. Figur 4).

Wie Weiterhin Figur 4 zu entnehmen ist, sind an der Unterseite der Heizrippen 44 verjüngte Stege 70 ausgebildet. Sämtliche verjüngten Stege 70 enden höhengleich und bilden eine Abstützebene für das Abdeckelement 6 aus. Dementsprechend ist das Abdeckelement zwischen den verjüngten Stegen 70 und Stützgegenstegen 71 der gegenüberliegenden Gehäuse 2, 4 dichtend geklemmt.

Das Abdeckelement 6 kann beispielsweise aus einem Metallblech gebildet sein, welches mit einem weichelastischen Kunststoff umspritzt ist, um einerseits einen umfänglichen Dichtrand 72 auszubilden, andererseits aber der mäandrierenden Struktur der verjüngten Stege 70 entsprechende Dichtstreifen, die in den Figur 1 und 4 dargestellt sind und die zwischen den einander gegenüberliegenden verjüngten Stegen 70 zur Anlage kommen. Der Dichtrand 72 wird zwischen den einander gegenüberliegenden Stirnseiten der Gehäuse 2, 4 geklemmt.

An den dem Steuergehäuse 10 zugewandten Stirnseiten haben die Gehäuse 2, 4 einen durch Fräsen ausgeformten Vorsprung, durch den jeweils ein Kühlelement 76 gebildet ist, welches eine sich parallel zu der Stirnseite erstreckende Kühlelement-Anlagefläche 78 ausbildet und dessen gegenüberliegende Oberfläche in der Zirkulationskammer in der Nähe der Strömungsdurchgangsöffnung 38 freiliegt (vgl. Figur 4).

Bei dem in den Figuren 1 bis 4 gezeigten Ausführungsbeispiel sind die Gehäusedeckel 8 üblicherweise aus gestanztem Metal gebildet. Auch diese können durch Umspritzen ausgeformte Dichtung aus einem elastischen Kunststoff tragen. Entsprechendes gilt für den Gehäusedeckel 16. Üblicherweise werden jedenfalls die Gehäusedeckel 8 durch Schrauben gegen die Gehäuse 2, 4 angelegt, welche Schrauben auch die beiden Gehäuse 2, 4 unter Zwischenlage des Abdeckelementes 6 gegeneinander fixieren und abdichten. Die Gehäuse 2, 4 sind identisch ausgebildet. In den Figuren 1 und 3 erkennbare Füße 80 können separat hergestellt und nachträglich an der Außenwandung des unteren Gehäuses 2 befestigt werden. Die Heizleistung der elektrischen Heizvorrichtung kann dadurch gesteigert werden, dass ein weiteres Paket von zwei Gehäusen 2, 4 neben das in den Figuren 1 bis 4 Gezeigte gesetzt wird. Die Steuerung der einzelnen Heizplattenelemente 24 kann durch eine einheitliche Steuerung mit einem einheitlichen Steuergehäuse bewirkt werden.

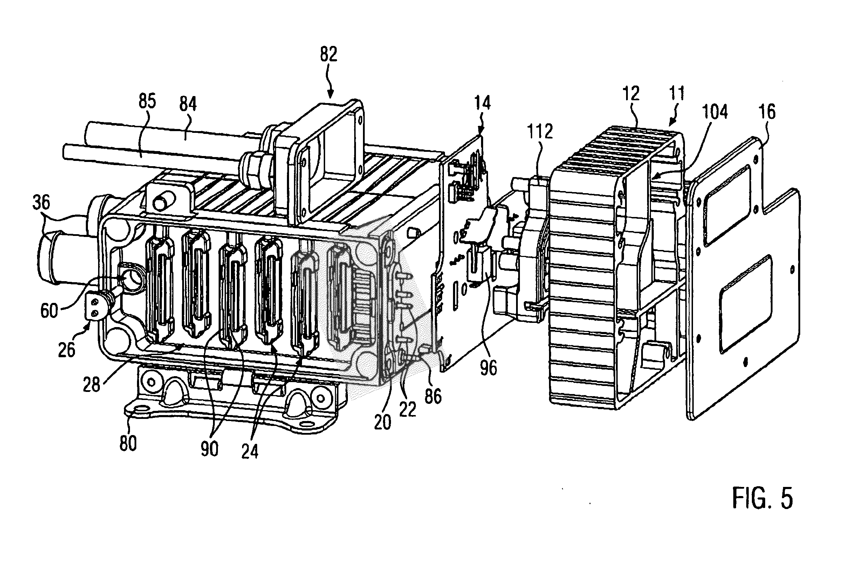

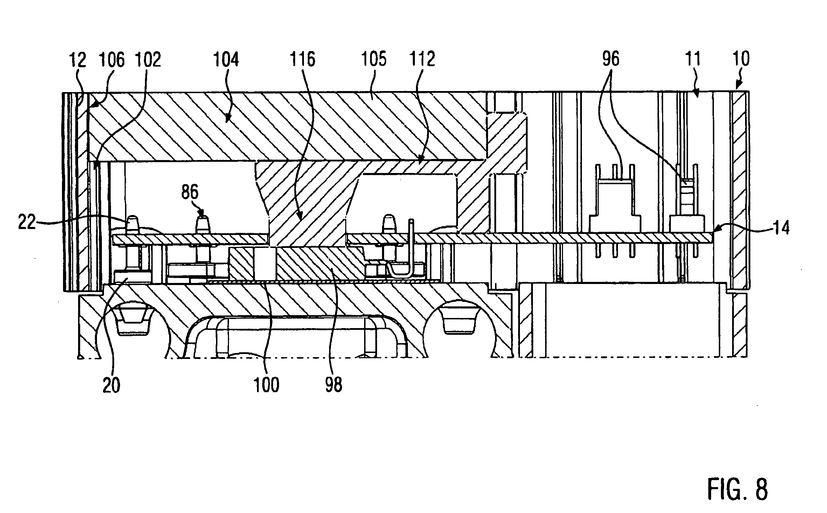

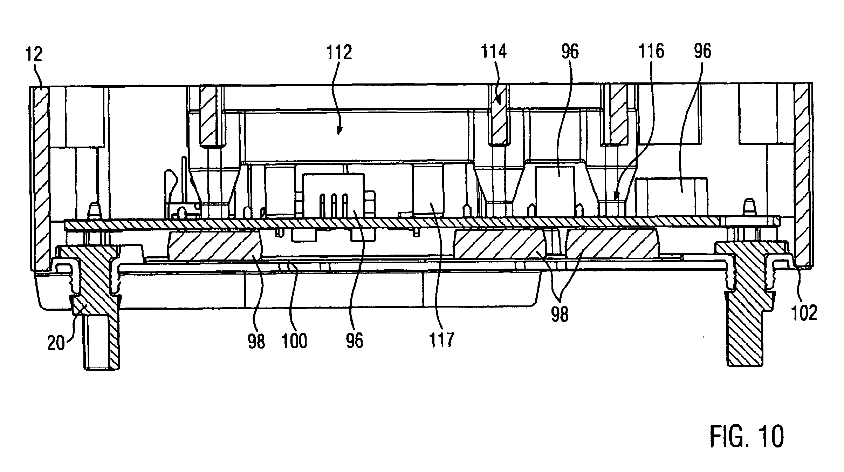

Die Figuren 5 bis 11 zeigen ein weiteres Ausführungsbeispiel einer erfindungsgemäßen Heizvorrichtung. Gleiche Bauteile sind gegenüber dem zuvor diskutierten Ausführungsbeispiel mit gleichen Bezugszeichen gekennzeichnet. Der Aufbau der Gehäuse 2, 4 der Zirkulationskammern 32 und der Anschlusskammern 28 ist im Wesentlichen identischen zu dem zuvor diskutierten Ausführungsbeispiel. Das Steuergehäuse 10 der Steuereinrichtung 11 überragt indes seitlich die beiden Gehäuse 2, 4 zur Befestigung eines Anschlussgehäuses 82, welches ein elektrisches Kabel 84 für den Leistungsstrom und ein elektrisches Kabel 85 für die Steuersignale trägt und abgedichtet in das Innere des Anschlussgehäuses 82 leitet. Im Bereich der mit Anschlussstutzen 36 ist jeweils ein mit den Gehäusen 2 bzw. 4 elektrisch kontaktiertes Kontaktelement 86 vorgesehen, welches eine Überprüfung der Polarität der beiden Gehäuse 2, 4 erlaubt, um einen eventuellen Fehler in der elektrischen Isolation der Gehäuse 2 bzw. 4 von den stromführenden Pfaden zu detektieren. Von diesem weiteren Kontaktelement 86 ist in Figur 5 jedenfalls das anschlussseitige Ende gezeigt.

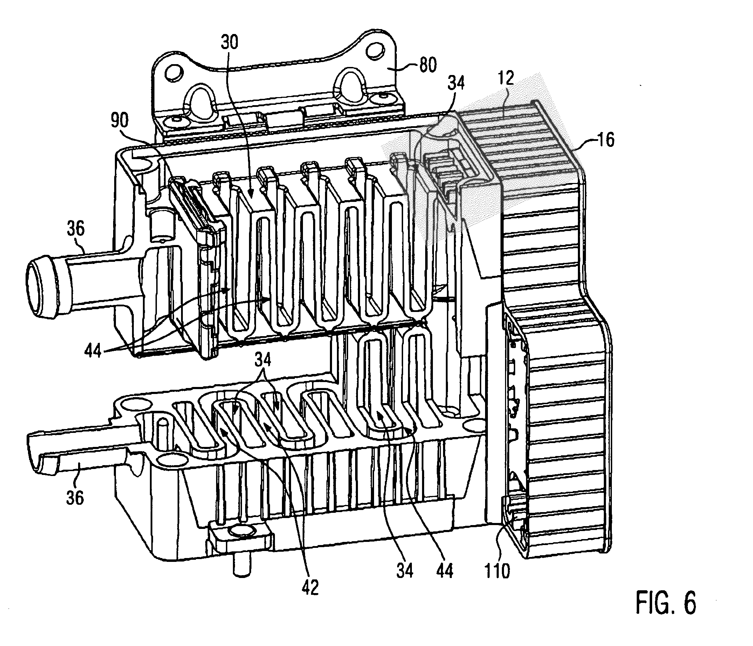

Die in Figur 6 weggenommenen Teile des Ausführungsbeispiels verdeutlichen den Strömungsweg innerhalb der Gehäuse 2, 4 sowie die Ausgestaltung der Heizrippen 44 und der darin ausgesparten U-förmigen Ausnehmungen 34.

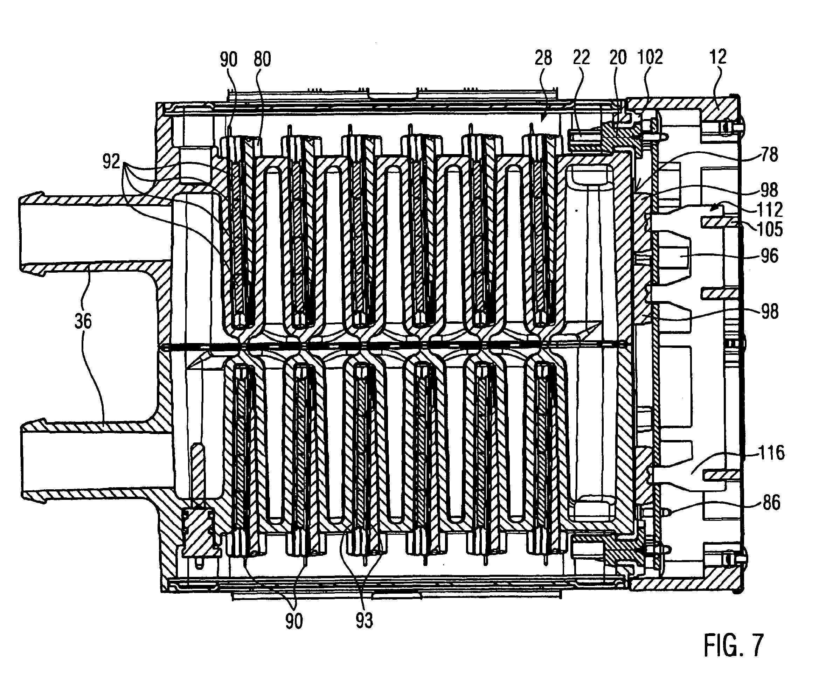

Wie Figur 6 des Weiteren zu entnehmen ist, haben die Heizplattenelemente 24 einen verbreiterten Kragen 88, der auf der Oberseite der Trennwand 30 aufliegt, so dass die Heizplattenelemente 24 mit vorbestimmter Tiefe in die U-förmigen Ausnehmungen 34 hineinragen. Dieser Kragen 88 wird oberseitig durch Kontaktfahnen 90 der Heizplattenelementen 24 überragt. Diese Kontaktfahnen 90 sind freigeschnittene Enden von elektrisch leitenden Blechplatten, die beiderseits an PTC-Steinen 92 anliegen, diese mit unterschiedlicher Polarität bestromen können und in Figur 7 zeichnerisch dargestellt und mit Bezugszeichen 93 gekennzeichnet sind. Es sind vier PTC-Steine 92 übereinander von jedem Heizplattenelement 24 umfasst. Wie gleichfalls Figur 7 zu entnehmen sind, liegen die Kontaktfahnen 90 auf gleicher Ebene innerhalb der Anschlusskammer 28 frei. In dieser Ebene liegt auch das anschlussseitige Ende des Temperaturfühlers 26 frei.

In der Anschlusskammer 28 befindet sich eine Anschlussleiterplatte, auf deren Darstellung in Figur 7 verzichtet wurde, die aber in Figur 2 mit Bezugszeichen 94 gekennzeichnet ist. Die Anschlussleiterplatte 94 erstreckt sich im Wesentlichen parallel zu der Trennwand 30 und liegt auf dem Kragen 88 auf. Sie bildet elektrische Anschlusselemente aus zur Aufnahme der einzelnen Kontaktfahnen 90 sowie eine Kontaktaufnahme für die Anschlussseite des Temperaturfühlers 26. Auf der dem Temperaturfühler 26 gegenüberliegenden Stirnseite hat die Anschlussleiterplatte 94 elektrische Anschlussaufnahmen zur Kontaktierung der in der Anschlusskammer 28 freiliegenden Steckelemente 22. Die Anschlussleiterplatte 94 sowie die elektrischen Anschlusselemente davon sind dabei so ausgestaltet, dass sämtliche elektrische Verbindungen zu der Anschlussleiterplatte 94 bewirkt werden, wenn die Anschlussleiterplatte 94 auf die Kragen 88 aufgelegt wird. Damit sind die elektrischen Steckkontakte in der Anschlusskammer 28 elektrisch mit den Steckelementen 22 verbunden.

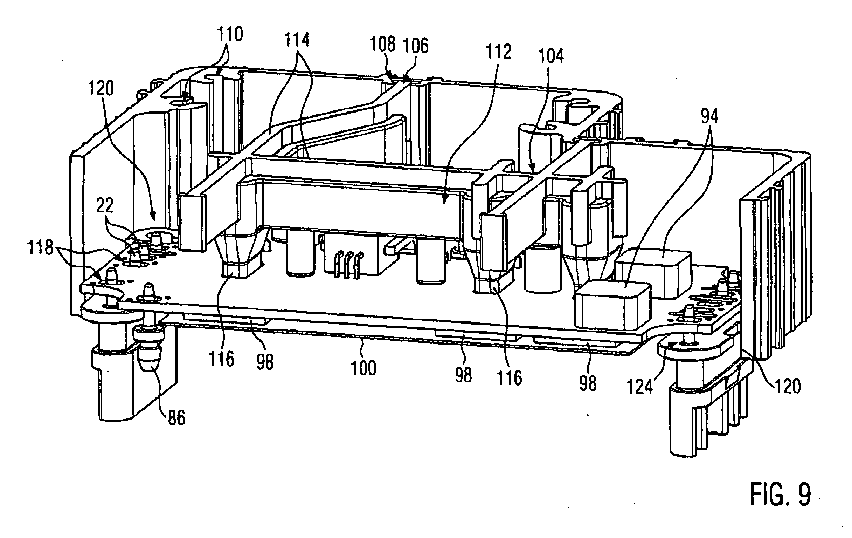

Nachfolgend wird der Aufbau der Steuereinrichtung 11 insbesondere unter Bezugnahme auf die Figuren 7 bis 11 beschrieben. Die bestückte Leiterplatte 14 trägt auf ihrer den Gehäusen 2, 4 abgewandten Oberfläche verschiedene elektrische bzw. elektronische Bauelemente 96. Auf der gegenüberliegenden, den Gehäusen 2, 4 zugewandten Unterseite der bestückten Leiterplatte 14, sind Verlustleistung erzeugende Bau- bzw. Steuerelemente 98, insbesondere Leistungstransistoren vorgesehen. Zwischen diesen Leistungstransistoren 98 und der Kühlelementanlagefläche 78 ist eine elektrische Isolierlage 100 vorgesehen. Diese Isolierlage 100 befindet sich in einer Aussparung eines Steuergehäusebodens 102 aus einem flexiblen Material, insbesondere aus einem weichelastischem Kunststoff, der zwischen der dem Gehäuse 2 bzw. 4 zugewandten Stirnseite des Steuergehäuserahmens 12 und der Stirnseite der Gehäuse 2, 4 geklemmt ist. Dieser Steuergehäuseboden 102 hat Aufnahmen, in welche die Steckergehäuse 20 eingebracht sind. Die Steckergehäuse 20 haben Flansche, die den Steuergehäuseboden 102 ober- und unterseitig fassen (vgl. Figuren 7, 9). Der Steuergehäuseboden 102 ragt hülsenförmig in die Steuergehäuseanschlussöffnungen 18 herein, wodurch eine sichere Halterung und Abdichtung der Steckergehäuse 20 gegeben ist (vgl. Figur 7). Das Innere des Steuergehäuses 10 ist dementsprechend gegenüber der Anschlusskammer 28 abgedichtet.

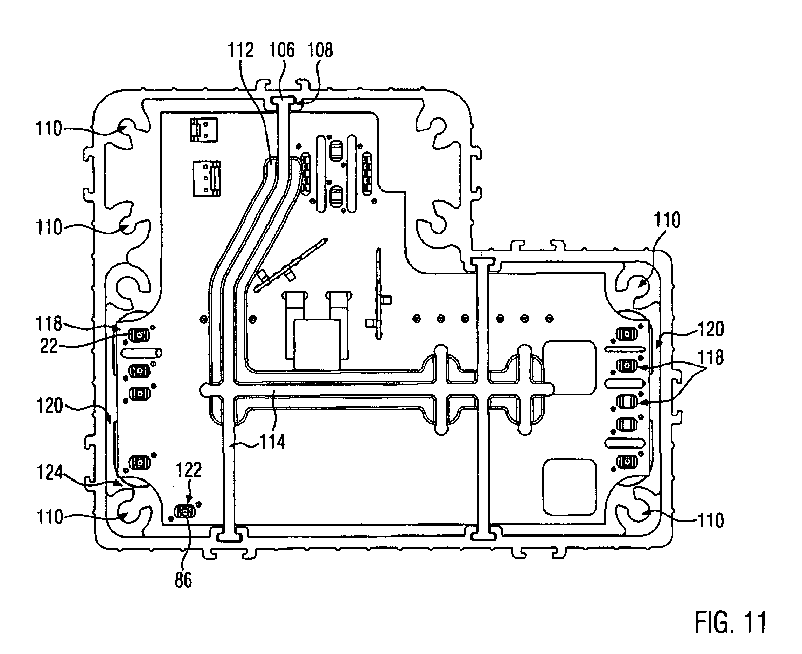

Wie insbesondere die Figuren 9 und 11 erkennen lassen, befindet sich innerhalb des Steuergehäuserahmens 12 eine Tragwerkstruktur 104, die als separates Bauteil, gebildet aus dünnen die Tragwerkstruktur 104 bildenden Stegen 105 hergestellt ist. Die Enden der Stege 105 sind nahe des Steuergehäuserahmens 12 zu einem Hammerkopf 106 verdickt. Der Hammerkopf 106 ist in Aufnahmeschlitzen 108 gehalten, die an der Innenwandung des Steuergehäuserahmens 12 durch diesen ausgebildet sind.

Unter anderem in den Eckbereichen sind an dem Steuergehäuserahmen 12 Befestigungsvorsprünge in Form von Befestigungsaugen 110 ausgebildet, deren Längserstreckung der Höhe des Steuergehäuserahmens 12 entspricht. Diese Augen sind nicht umfänglich geschlossen, sondern mit einem sich zum Inneren des Steuergehäuserahmens 12 hin öffnenden Schlitz versehen. Die Befestigungsaugen 110 dienen der Halterung von Gewindestangen, welche den Steuergehäuserahmen 12 unter Einschluss des Steuergehäusedeckels 16 mit den Gehäusen 2, 4 verbinden. Sie dienen aber auch der Aufnahme von Gewindestangen, die das Anschlussgehäuse 82 an dem Steuergehäuserahmen 12 befestigen.

Zwischen der Tragwerkstruktur 104 und der bestückten Leiterplatte 14 ist ein mit Bezugszeichen 112 gekennzeichnetes Kompressionselement aus einem weichelastischen Kunststoff vorgesehen. Dieses Kompressionselement 112 bildet an seiner der Tragwerkstruktur 104 zugewandten Stirnseite U-förmige Ausnehmungen für die Stege 105 der Tragwerkstruktur 104 aus, so dass das Kompressionselement 112 formschlüssig an der Kunststoff vorgesehen. Dieses Kompressionselement 112 bildet an seiner der Tragwerkstruktur 104 zugewandten Stirnseite U-förmige Ausnehmungen für die Stege 105 der Tragwerkstruktur 104 aus, so dass das Kompressionselement 112 formschlüssig an der Tragwerkstruktur 104 gehalten ist. Das Kompressionselement 112 ist ebenfalls gitterartig ausgebildet, wobei Gitterstege 114 des Kompressionselementes 112 von Stützpfeilern 116 des Kompressionselementes 112 überragt werden, die an der bestückten Leiterplatte 14 korrespondierend hierzu ausgebildeten Aussparungen eingreifen und unmittelbar an den die Verlustleistung erzeugenden Steuerkomponenten 98 anliegen. Die Stützpfeiler 116 sind dort vorgesehen, wo auf der den Stützpfeilern 116 gegenüberliegenden Seite der bestückten Leiterplatte 14 die Verlustleistung erzeugenden Steuerkomponenten 98 angeordnet sind. Von dem Kompressionselement 112 und/oder den Gitterstegen 114 gehen ein oder mehrere Niederhalter 117 ab, die gegen die Leiterplatte 14 wirken.

Wie Figur 11 erkennen lässt hat die bestückte Leiterplatte 14 des Weiteren Kontaktelementaufnahmen 118, die an gegenüberliegenden Randbereichen 120 der bestückten Leiterplatte 14 ausgespart sind. Die Kontaktelementaufnahmen 118 sind als Langlöcher ausgebildet. Auch eine weitere Kontaktaufnahme 122 für das Kontaktelement 86 ist als Langloch ausgebildet. Sämtliche Langlöcher haben sich parallel zueinander erstreckende Längsachsen. In den Kontaktelementaufnahmen 118 sind Steckgegenelemente 119 angeordnet. Die bestückte Leiterplatte 14 ist mit geringem Spiel innerhalb des Steuergehäuserahmens 12 fixiert. In Eckbereichen der bestückten Leiterplatte 14 sind Freischnitte 124 vorgesehen, wodurch die Befestigungsaugen 110 in ihrer Längsrichtung durch die Ebene der bestückten Leiterplatte 14 hindurch durchgängig sind.

Zur Montage wird üblicherweise die Steuereinrichtung 11 zunächst vormontiert, d.h. die bestückte Leiterplatte 14 wird innerhalb des Steuergehäuserahmens 12 angeordnet. Die Steckergehäuse 20 werden durch die Aussparungen des Steuergehäusebodens 102 hindurchgesteckt und damit verbunden. Danach unter Zwischenlage der Isolierlage 100 die so vormontierte Steuereinrichtung 10 auf die Gehäuse 2, 4 aufgeschoben. Dabei werden die Steckergehäuse 20 in die Gehäuseanschlussöffnungen 18 dichtend eingebracht. Die Steckelemente 22 können hierbei aufgrund der Ausgestaltung der Kontaktaufnahmen 118 als Langlöcher eine gewisse Ausgleichsbewegung vollziehen, ohne dass der elektrische Kontakt zwischen diesen Steckelementen 22 und den Steckgegenelementen 119 der bestückten Leiterplatte 14 verloren geht. Danach wird der Steuergehäuserahmen 12 zuses 10 an den Gehäusen 2, 4 sind die Verlustleistung erzeugenden Steuerkomponenten 98 unter Vorspannung an die gehäuseseitigen Kühlelemente 76 angelegt und damit zuverlässig wärmeleitend verbunden. Im Rahmen dieser Montage werden insbesondere die Stützpfeiler 116 der Kompressionselemente 112 elastisch komprimiert, wodurch in dem Kompressionselement 112 eine elastische Vorspannung gespeichert wird.

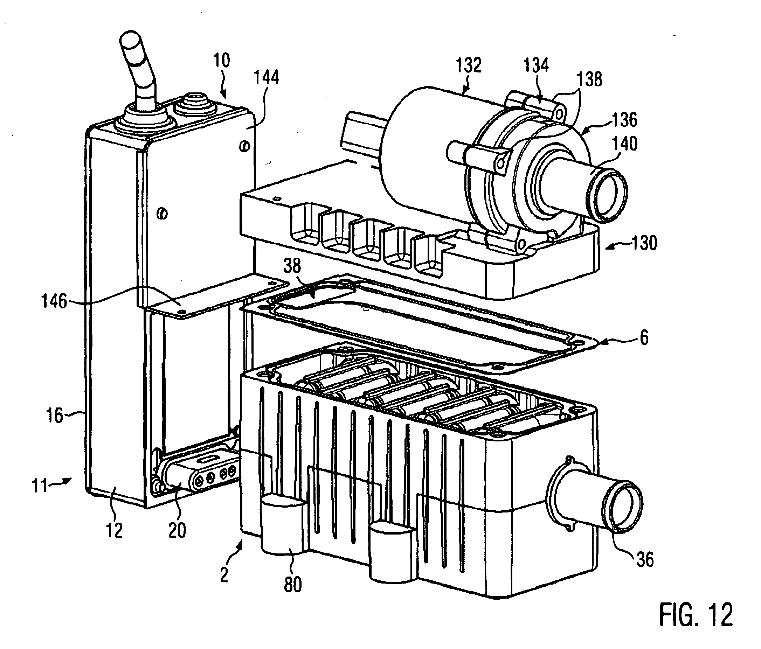

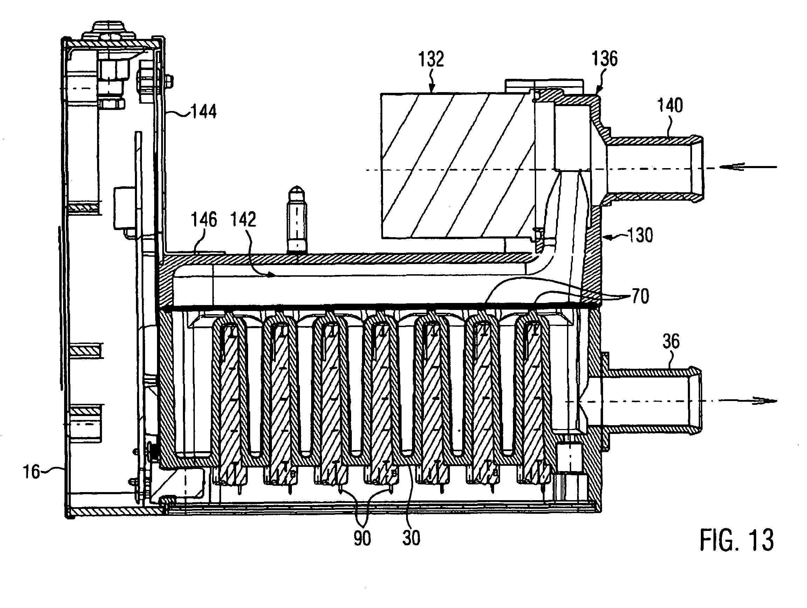

Die Figuren 12 und 13 zeigen ein weiteres Ausführungsbeispiel einer erfindungsgemäßen elektrischen Heizvorrichtung. Gleiche Bauteile sind gegenüber den zuvor diskutieren Ausführungsbeispielen mit gleichen Bezugszeichen gekennzeichnet.

Das Ausführungsbeispiel nach den Figuren 12 und 13 hat lediglich ein Gehäuse 2, welches mit einem Abdeckelement 6 zur Ausbildung der Zirkulationskammer 32 zwischen dem Abdeckelement 6 und der Trennwand 30 versehen ist. Das Ausführungsbeispiel hat ferner einen Gehäusedeckel 130, der eine Pumpe 132 trägt und jedenfalls teilweise ein Pumpengehäuse 134 ausbildet. Dabei formt der Gehäusedeckel 130 ein Strömungseinlassgehäuseteil 136 aus, welches Befestigungselemente 138 zum Anflanschen der Pumpe 132 sowie einen Schlauchanschlussstutzen 140 ausformt. Das Abdeckelement 6 hat lediglich an seiner dem Gehäuse 2 zugewandten Unterseite Dichtstreifen 74 entsprechend der Struktur der verjüngten Stege 70. Auf der gegenüberliegenden Oberseite sind entsprechend einem durch den Gehäusedeckel 130 ausgebildeten Pumpkanal 142 verlaufende Dichtstreifen 74 auf dem Abdeckelement 6 vorgesehen. Dieser Pumpkanal 142 verbindet die Strömungsdurchgangsöffnung 38 mit dem Strömungseinlassgehäuseteil 136.

Der Steuergehäuserahmen 12 ist identisch zu dem unter Bezugnahme auf die Figuren 1 bis 4 diskutierten Ausführungsbeispiel ausgeformt. Allerdings ist der Steuergehäuserahmen durch eine Steuergehäusebodenabdeckung 144 teilweise verschlossen, die einen umbogenen Flansch 146 ausformt, der auf die Oberseite des Steuergehäusedeckels 130 aufgeschraubt wird.

Die strommäßige Versorgung und der steuerungsmäßige Anschluss der Pumpe 132 erfolgt vorzugsweise ebenfalls über die bestückte Leiterplatte 12. Bei dem in den Figuren 12 und 13 gezeigten Ausführungsbeispiel erfolgt dies über ein Kabel, welches die Steuereinrichtung 11 mit der Pumpe 132 verbindet. Bei dem in den Figuren 12 und 13 gezeigten Ausführungsbeispiel erstreckt sich das (nicht dargestellte) Kabel von einer Seitenfläche und 13 gezeigten Ausführungsbeispiel erfolgt dies über ein Kabel, welches die Steuereinrichtung 11 mit der Pumpe 132 verbindet. Bei dem in den Figuren 12 und 13 gezeigten Ausführungsbeispiel erstreckt sich das (nicht dargestellte) Kabel von einer Seitenfläche des Steuergehäuserahmens 12 zu der Pumpe 32. Ebenso gut kann allerdings auch ein Steckergehäuse 20 auf Höhe der Pumpe 132 vorgesehen sein, über welches der elektrische Anschluss der Pumpe 132 erfolgt.

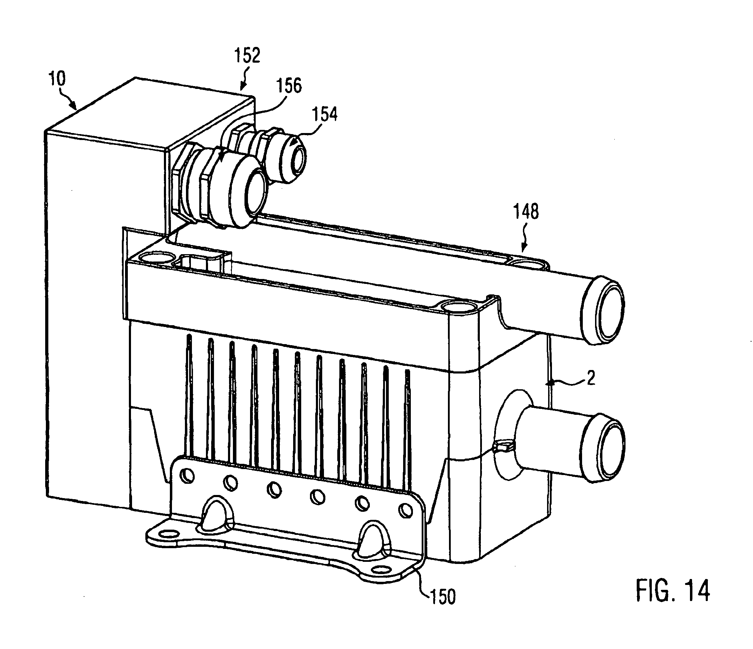

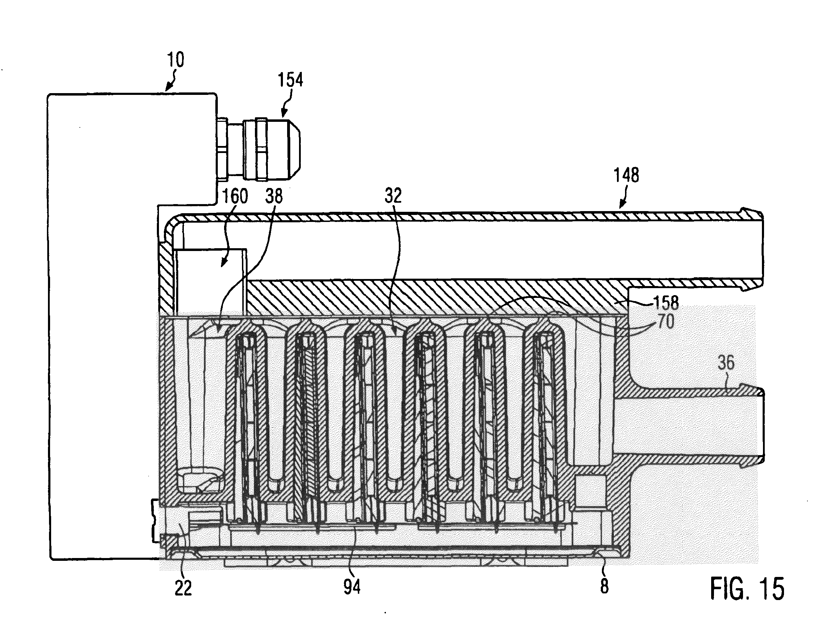

Die Figuren 14 und 15 zeigen ein viertes Ausführungsbeispiel. Gleiche Bauteile sind gegenüber dem zuvor Diskutierten mit gleichen Bezugszeichen gekennzeichnet.

Wie die zuvor beschriebenen Ausführungsbeispiele umfasst das vierte Ausführungsbeispiel ein Gehäuse 2, welches mit einem Gehäusedeckel 148 verbunden ist und an dessen Längsseiten Befestigungsflansche 150 zur Befestigung der elektrischen Heizvorrichtung angebracht sind. An einer Stirnseite des Gehäuses 2 und des Gehäusedeckels 148 befindet sich das Steuergehäuse 10 mit der darin aufgenommenen und in den Figuren 14 und 15 nicht detaillierten Steuerung. Dieses Steuergehäuse 10 ist vorliegend L-förmig ausgebildet mit einem den Gehäusedeckel 148 geringfügig überragenden Überhang 152, an dessen Stirnseiten zwei Kabelklemmen 154, 156 zur verdreh- und zugsicheren Halterung und Abdichtung von Kabeln montiert sind. Die Kabelklemme 154 dient zum Anschluss eines Steuerungskabels; die größere Kabelklemme 156 zum Anschluss eines Kabels für den Leistungsstrom. Das Gehäuse 2 ist identisch wie die zuvor beschriebenen Gehäuse 2 ausgebildet. Auf die obige Beschreibung wird insofern verwiesen.

Der Gehäusedeckel 148 weist eine auf dem Gehäuse 2 aufliegende Bodenplatte 158 auf, die mit dem Rand des Gehäuses 2 und den verjüngten Stegen 10 unter Einschluss des Abdeckelementes 6 zusammenwirkt, wodurch die Zirkulationskammer 32 im Bereich der verjüngten Stege 70 abgedichtet ist. In Strömungsrichtung hinter der Strömungsdurchgangsöffnung 38 bildet der Gehäusedeckel 148 einen Strömungsdurchgang 160 aus, der mit einem einteilig an dem Gehäusedeckel 148 ausgeformten Rohr 162 kommuniziert, welches sich parallel zu dem Anschlussstutzen 136 erstreckt und im Wesentlichen höhengleich mit diesem endet.

Das in den Figuren 14 und 15 gezeigte Ausführungsbeispiel ist relativ klein und hat eine Wärmeleistung von nicht mehr als 3 kW, üblicherweise eine Wärmeleistung von zwischen

### Bezugszeichenliste

- 2: erstes Gehäuse
- 4: zweites Gehäuse
- 6: Abdeckelement
- 8: Gehäusedeckel
- 10: Steuergehäuse
- 11: Steuereinrichtung
- 12: Steuergehäuserahmen
- 14: bestückte Leiterplatte
- 16: Steuergehäusedeckel
- 18: Gehäuseanschlussöffnung
- 20: Steckergehäuse
- 22: Steckelement
- 24: Heizplattenelement/PTC-Heizelement
- 26: Temperaturfühler
- 28: Anschlusskammer
- 30: Trennwand
- 32: Zirkulationskammer
- 34: U-förmige Ausnehmung
- 36: Anschlussstutzen
- 38: Strömungsdurchgangsöffnung
- 40: Strömungskanal
- 42: Strömungskanalabschnitt
- 44: Heizrippen
- 46: Innenseite
- 48: Steg
- 50: Ausbuchtung
- 52: freies Ende der Heizrippe
- 54: fußseitiges Ende der Heizrippe
- 56: Strömungsdurchgang
- 60: Temperaturfühlerbohrung
- 70: verjüngter Steg
- 72: Dichtrand
- 74: Dichtstreifen
- 76: Kühlelement
- 78: Kühlelement-Anlagefläche
- 80: Fuß
- 82: Anschlussgehäuse
- 84: elektrisches Kabel für den Leistungsstrom
- 85: elektrisches Kabel für die Steuersignale
- 86: Kontaktelement
- 88: Kragen
- 90: Kontaktfahne
- 92: PTC-Stein
- 93: Blechplatte
- 94: Anschlussleiterplatte
- 96: elektrisches Bauelement
- 98: Verlustleistung erzeugende Steuerkomponente
- 100: Isolierlage
- 102: Steuergehäuseboden
- 104: Tragwerkstruktur
- 105: Steg der Tragwerkstruktur
- 106: Hammerkopf
- 108: Aufnahmeschlitz
- 110: Befestigungsaugen
- 112: Kompressionselement
- 114: Gittersteg
- 116: Stützpfeiler
- 117: Niederhalter
- 118: Kontaktelementaufnahme
- 119: Steckgegenelemente
- 120: Randbereich
- 122: Kontaktaufnahme
- 124: Freischnitt
- 130: Gehäusedeckel
- 132: Pumpe
- 134: Pumpengehäuse
- 136: Strömungseinlassgehäuseteil
- 138: Befestigungselement
- 140: Schlauchanschlussstutzen
- 142: Pumpkanal
- 144: Steuergehäusebodenabdeckung
- 146: Flansch
- 148: Gehäusedeckel
- 150: Befestigungsflansch
- 152: Überhang
- 154: Kabelklemme
- 156: Kabelklemme
- 158: Gehäuseboden
- 160: Strömungsdurchgang
- 162: Rohr

## Patentansprüche

1. Verfahren zum Herstellen einer elektrischen Heizvorrichtung, insbesondere für ein Kraftfahrzeug, mit einem Gehäuse (2, 4) welches eine von einem Medium durchströmbare Zirkulationskammer (32) umschließt, in welche Heizrippen (44) hineinragen, die mit wenigstens einem PTC-Heizelement (24) in Wärme leitendem Kontakt stehen, und mit einer in baulicher Einheit vorgesehenen Steuereinrichtung (11) mit wenigstens einer bestückten Leiterplatte (14), die in einem Steuergehäuse (10) aufgenommen ist, und welche wenigstens ein Verlustleistung erzeugendes Steuerelement (98) trägt,
**dadurch gekennzeichnet,**
**dass** das Verlustleistung erzeugende Steuerelement (98) bei der Montage des Steuergehäuses (10) an dem Gehäuse (2, 4) unter Vorspannung gegen ein an dem Gehäuse (2, 4) ausgebildetes Kühlelement (76) angelegt wird,
**dass** die Vorspannung in einem kompressiblen Kompressionselement (112) gespeichert wird, welches eine gegen die bestückte Leiterplatte (14) wirkende Druckkraft bewirkt, und dass ein aus einem metallischen Werkstoff gebildeter Steuergehäuserahmen (2), der die bestückte Leiterplatte (14) umfänglich umgibt, und eine innerhalb des Steuergehäuserahmens (12) vorgesehene und das Kompressionselement (112) tragende Tragwerkstruktur (104) als separate Bauteile hergestellt und miteinander verbunden werden.

2. Verfahren nach Anspruch 1, **dadurch gekennzeichnet, dass** das Verlustleistung erzeugende Steuerelement (98) unter Zwischenlage einer elektrischen Isolierlage (100) an dem Kühlelement (76) angelegt wird.

3. Verfahren nach Anspruch 1 oder 2, **dadurch gekennzeichnet, dass** die bestückte Leiterplatte (14) mit geringem Spiel zwischen Innenflächen des Steuergehäuserahmens (12) gehalten wird.

4. Verfahren nach einem der vorherigen Ansprüche, **dadurch gekennzeichnet, dass** der Steuergehäuserahmen (12) als Aluminium-Strangpressprofil hergestellt wird.

## Claims

1. Method for producing an electrical heating device, in particular for a motor vehicle, with a housing (2, 4) which encloses a circulation chamber (32) through which a medium can flow, in which heating ribs (44) protrude which are in thermally conducting contact with at least one PTC heating element (24), and with a control device (11) provided in a constructional unit with at least one assembled conductor board (14), which is accommodated in a control housing (10) and which comprises at least one control component (98) producing power loss,
**characterized in that**
during the installation of the control housing (10) on the housing (2, 4), the control component (98) producing power loss is assembled under contact pressure against a cooling element (76) formed on the housing (2, 4), that a control housing frame (12) formed from a metallic material, which circumferentially surrounds the assembled conductor board (14), and a supporting framework structure (104), provided within control housing frame (12), are produced as individual elements and are joined and that the prestress is stored in a compressible compression element (112) which causes a compression force acting against the assembled conductor board (14).

2. The method according claim 1, wherein the control element (98) producing the power loss is positioned to abut the cooling element (76) with the intermediate positioning of an electrical insulating layer (100).

3. The method according to claim 1 or 2, wherein the assembled conductor board (14) is positioned with slight play between inner surfaces of the control housing frame (12).

4. The method according to any of the preceding claims, wherein the control housing frame (12) is made as an aluminium extruded section.

## Revendications

1. Procédé de fabrication d'un dispositif de chauffage électrique, en particulier d'un véhicule automobile, avec un boîtier (2, 4) qui abrite une chambre de circulation (32) traversée par un fluide, dans lequel font saillie des nervures de chauffage (44) qui sont en contact de conduction calorifique avec au moins un élément chauffant PTC (24), et un dispositif de commande (11) pourvu dans l'unité structurelle avec au moins un circuit imprimé assemblé (14) qui est agencé dans un boîtier de commande (10) et qui comporte au moins un élément de commande produisant une consommation de puissance (98),
**caractérisé**
**en ce que** l'élément de commande produisant une consommation de puissance (98) est agencé sous précontrainte contre un élément de refroidissement (76) installé sur le boîtier (2, 4) lors du montage du boîtier de commande (10) sur le boîtier (2, 4)
**en ce qu'**un châssis de boîtier de commande (2) constitué d'un matériau métallique qui entoure complètement le circuit imprimé assemblé (14) et une structure de support (104) agencée à l'intérieur du châssis de boîtier de commande (12) sont construits sous forme de composants indépendants et connectés entre eux et
**en ce que** la précontrainte est accumulée dans un élément de compression compressible (112) qui exerce une force de compression sur le circuit imprimé assemblé (14).

2. Procédé selon la revendication 1, **caractérisé en ce que** l'élément de commande produisant une consommation de puissance (98) est monté sur l'élément de refroidissement (76) avec une couche d'isolation électrique (100) intercalée.

3. Procédé la revendication 1 ou 2, **caractérisé en ce que** le circuit imprimé assemblé (14) est maintenu avec un jeu réduit entre les surfaces internes du châssis de boîtier de commande (12).

4. Procédé selon l'une des revendications précédentes, **caractérisé en ce que** le châssis du boîtier de commande (12) est construit sous forme d'un profilé en aluminium extrudé.
